(19) Europäisches Patentamt

European Patent Office

Office européen des brevets

(11) **EP 0 619 140 B1**

(12) **EUROPÄISCHE PATENTSCHRIFT**

(45) Veröffentlichungstag und Bekanntmachung des Hinweises auf die Patenterteilung:
**26.05.1999 Patentblatt 1999/21**

(51) Int. Cl.$^6$: **B01J 20/24**, C09K 3/32, A01K 1/015

(21) Anmeldenummer: **94104728.4**

(22) Anmeldetag: **24.03.1994**

(54) **Verfahren zur Herstellung von Sorptionsmitteln auf der Basis von Cellulosefasern, zerkleinertem Holzmaterial und Tonmineralien**

Process dor production of sorbent agents based on cellulosic fibres, wooden chips and clay materials

Procédé pour la production de matériaux de sorption à base de fibres de cellulose, de bois déchiqueté et d'argiles

(84) Benannte Vertragsstaaten:
**AT DE DK ES FR GB GR IT NL SE**

(30) Priorität: **07.04.1993 DE 4311488**

(43) Veröffentlichungstag der Anmeldung:
**12.10.1994 Patentblatt 1994/41**

(73) Patentinhaber: **SÜD-CHEMIE AG**
**D-80333 München (DE)**

(72) Erfinder:
• **Hähn, Reinhard, Dr.**
**D-84186 Vilsheim (DE)**
• **Haubensak, Otto, Dr.**
**D-83098 Brannenburg (DE)**

(74) Vertreter:
**Reitzner, Bruno, Dr. et al**
**Patentanwälte Dipl.-Ing. R. Splanemann**
**Dr. B. Reitzner, Dipl.-Ing. K. Baronetzky**
**Tal 13**
**80331 München (DE)**

(56) Entgegenhaltungen:
EP-A- 0 111 467          WO-A-83/03255
DE-A- 3 816 225          DE-A- 4 028 933
DE-A- 4 114 370          US-A- 4 821 677
US-A- 5 188 064

**Beschreibung**

Die Erfindung betrifft ein Verfahren zur Herstellung von Sorptionsmitteln auf der Basis von Cellulosfasern, zerkleinertem Holzmaterial und Tonmineralien zur Aufnahme von Flüssigkeiten. Diese Sorptionsmittel sind zur Aufnahme beliebiger Flüssigkeiten geeignet; sie eignen sich aber insbesondere als Streumittel für Heimtiere, weshalb sich die nachfolgenden Ausführungen auf dieses Anwendungsgebiet beziehen.

Die Heimtierhaltung in einer weitgehend verstädterten Umwelt ist in zunehmendem Maße mit der Verwendung von Streumaterialien verbunden. Diese haben die Aufgabe, die von den Tieren abgegebenen Flüssigkeiten aufzusaugen und dabei möglichst die Geruchsentwicklung zu hemmen oder zu verhindern. Sie sollten ferner den halbfesten, feuchten tierischen Exkrementen und Ausscheidungen Feuchtigkeit entziehen, um damit die Geruchsentwicklung zu vermindern. Gute Streumaterialien haben darüber hinaus die Eigenschaft, die abgegebenen oder entzogenen Flüssigkeiten unter Bildung eines kompakten Klumpens aufzunehmen, der in einfacher und sparsamer Weise entfernt werden kann. Eine optimale Tierstreu hat somit ein hohes Saugvermögen.

Die auf dem Markt anzutreffenden Produkte sind einmal organische Substanzen, wie Stroh, Sägemehl, Holzspäne, Rinden, poröse Kunststoffperlen, geshreddertes Papier, Cellulosefasern, Agrarabfälle, Polyacrylate usw.; diese werden allen oder in Mischungen mit anorganischen Materialien eingesetzt. Der Nachteil der organischen Streumaterialien ist oftmals die nicht zufriedenstellende Klumpenbildung bzw. ihre Konsistenz sowie ihre Neigung zur bakteriellen Zersetzung, insbesondere im Zusammenwirken mit Feuchtigkeit.

Aus der DE-A-37 28 812 und der DE-C-38 25 905 sind Sorptionsmittel auf der Basis von Tonen und Tonmineralen mit einem Gehalt eines Minerals aus der Gruppe der Smektite bekannt, die zur Erzielung eines hohen Porenvolumnes bei Temperaturen von mehr als 650 °C gebrannt werden. Als Porosierungsmittel können organische Substanzen, wie Sägemehl, Kork, Reisschalen oder dergleichen zugesetzt werden. Diese Porosierungsmittel werden jedoch beim Erhitzen ausgebrannt und verbleiben nicht mehr im Produkt. Das nach dem Brennen erhaltene Material ist nicht mehr quellfähig.

Aus der US-A-5 000 115 ist ein Sorptionsmittel, insbesondere ein Streumittel für Heimtiere auf der Basis von quellfähigen smektitischen Tonmineralen bekannt, welches zusätzlich noch Sand oder cellulosehaltige Materialien wie Holzschnipsel oder -späne und zerkleinertes Papier enthalten kann. Über die Teilchengröße und den Feuchtigkeitsgehalt dieser Zusätze finden sich keine Angaben. Weiterhin werden die Bestandteile ohne Verdichtung trocken miteinander vermischt.

Aus der US-A-4 341 180 ist ein Verfahren zur Herstellung von Streumaterial für Heimtiere bekannt, wonach wasserhaltige Altpapierrückstände auf einen Wassergehalt von etwa 32 bis 40 % gebracht, extrudiert, pelletiert und getrocknet werden. Die Papierrückstände können etwa 10 bis 50 % der üblichen Papierfüllstoffe, wie Kaolin, enthalten. Diese Füllstoffe sind aber nicht quellfähig.

Aus der DE-A-4 101 243 ist eine Tierstreu und ein Verfahren zu ihrer Herstellung bekannt, wonach Cellulose, Cellulosederivate und/oder cellulosehaltige Materialien landwirtschaftlicher oder industrieller Herkunft sowie Holzabfälle und Sägemehl mit einer Partikelgröße von bis zu 1 mm mit Beschwerungsmitteln und Verdickungsmitteln, wie Bentonit, in Anwesenheit von Wasser vermischt werden, das vorhandene Wasser abgetrennt wird und der verbleibende Rückstand auf eine Teilchengröße oberhalb von 1 mm zerkleinert wird. Das Beschwerungsmittel wird in einer solchen Menge zugesetzt, daß die Schüttdichte der Tierstreu nach dem Trocknen oberhalb von etwa 500 kg/m$^3$ liegt. Eine Trokkenkompaktierung des Ausgangsgemisches ist nicht beschrieben.

Weiterhin ist aus der DE-A-3 816 225 ein Streumaterial auf der Basis von zellstoffhaltigem Material als Naßsubstanz und einem kapillarfähigen, kleinkörnigen Stoff, wie Bentonit, bekannt, das gegenüber den organischen Streumaterialien gewisse Vorteile, z.B. ein höheres Schüttgewicht, bietet. Vorzugsweise wird Papierfangstoff als Naßsubstanz mit einem Feuchtegehalt von 50 bis 60 % und Bimssteinmehl mit einem Feuchtegehalt von < 30 % gemischt und anschließend getrocknet.

Die Verwendung des zellstoffhaltigen Materials als Naßsubstanz macht eine aufwendige Trocknung des Streumaterials erforderlich.

Weiterhin ist aus der DE-A-4 028 933 ein Streumaterial auf der Basis von Cellulose in watteähnlicher Gestalt, und Tonmehl bekannt. Bei der Herstellung dieses Streumaterials wird Altpapier zu einer watteähnlichen Struktur aufbereitet und mit Tonmehl (Kaolinit und Quarz) auf hohen druckerzeugenden Pressen verarbeitet. Nach "Ullmann's Enzyklopädie der Technischen Chemie", 4. Aufl., Band 23, S. 312 ff. ist Kaolinit ein Zweischichtmineral, während Quarz bzw. Bimsstein überhaupt keine Schichtmineralien darstellen. Mit diesen Materialien kann daher kein Streumaterial erhalten werden, das in der Lage ist, bei Benetzung mit Feuchtigkeit Klumpen zu bilden.

Die US-A-5 188 064 betrifft ein als Tierstreu geeignetes Sorptionsmittel, das bei Benetzung mit Feuchtigkeit Klumpen bildet. Das Sorptionsmittel wird aus einem cellulosehaltigem Material sowie einem smektitischen Tonmineral hergestellt. Das cellulosehaltige Material kann ein Holzmaterial sein. Die feinzeilige Mischung wird jedoch nicht verdichtet, wodurch ein hoher Anteil von staubfeinen Komponenten hinterbleibt.

Gegenüber dem vorstehend beschriebenen Stand der Technik wurde nun gefunden, daß die Eigenschaften von Sorptionsmitteln, insbesondere von Streumaterialien, erheblich verbessert werden können, wenn die Bestandteile in teilgetrockneter Form und insbesondere smektitische Dreischichtmineralien als mineralische Anteile sowie feinteilige cellulosehaltige Materialien verwendet werden.

Die Erfindung betrifft somit ein Verfahren zur Herstellung von Sorptionsmitteln auf der Basis von Cellulosefasern, zerkleinertem Holzmaterial und Tonmineralien zur Aufnahme von Flüssigkeiten, das dadurch gekennzeichnet ist, daß man

(a) ein feinteiliges cellulosehaltiges Material mit einer durchschnittlichen Faserlänge von 0,4 bis 3,0 mm und einer Restfeuchte von 5 bis 15 Gew.-% und/oder

(b) ein zerkleinertes Holzmaterial mit einer durchschnittlichen Faserlänge von 0,05 bis 2,0 mm und einer Restfeuchte von 5 bis 20 Gew.-% und

(c) ein smektitisches Tonmineral in feinteiliger Form mit einer durchschnittlichen Partikelgröße von 0,1 bis 1,0 mm, einer Restfeuchte von 5 bis 15 Gew.-%, einem Smektitgehalt von mindestens 50 % homogen vermischt

(d) die Mischung verdichtet und

(e) die so verdichtete Mischung zerkleinert.

Die verwendeten smektitischen Tonmineralien sind durch ihre Fähigkeit zur Quellung mit wäßrigen Flüssigkeiten in der Lage, Klumpen zu bilden. Wegen dieser Klumpenbildung kann der mit Flüssigkeit benetzte Anteil des Streumaterials separat entfernt werden, wodurch Streumaterial eingespart werden kann. Mit der besonderen Struktur der smektitischen Tonmineralien ist auch die Fähigkeit zur Adsorption von störenden Gerüchen verbunden, die bei den tierischen Ausscheidungen und Exkrementen entstehen. Die smektitischen Tonmineralien lassen sich weiterhin leicht umweltverträglich entsorgen.

Als feinteiliges cellulosehaltiges Material verwendet man vorzugsweise feingemahlenen Zellstoff und/oder einen Sekundärfasern enthaltenden Cellulose-Stoff, und als zerkleinertes Holzmaterial vorzugsweise feingemahlenes Holzmehl und/oder zerkleinerte Holzspäne. Vorzugsweise wird die Mischung in der Stufe (d) kompakiert, brikettiert oder preßgranuliert.

Vorzugsweise wendet man einen Preßdruck von 20 bis 200 kN/cm, insbesondere von 40 bis 100 kN/cm an, wobei man das Ausgangsgemisch vorzugsweise zwischen Preßwalzen (Brikettierwalzen oder Preßgranulierwalzen) leitet.

Vorzugsweise wird das Ausgangsgemisch in vorgetrockneter Form bei einem Wassergehalt von 6 bis 19 Gew.-% kompaktiert, brikettiert oder preßgranuliert. Auf diese Weise kann eine Trocknung des Fertigproduktes vollständig vermieden werden, d.h. mit dem erfindungsgemäßen Herstellungsverfahren ist ein erheblicher wirtschaftlicher Vorteil verbunden. Auch können die bei der Trocknung von cellulosehaltigem Material erforderlichen aufwendigen Explosionsschutzmaßnahmen entfallen.

Durch die Verwendung von quellfähigen smektitischen Tonmineralien ergibt sich überraschenderweise, daß auch Mischungen aus überwiegend feinteiligen cellulosehaltigen Materialien und/oder zerkleinerten Holzmaterialien (die für sich gesehen mit Feuchtigkeit keine Klumpen bilden) mit geringeren Anteilen an quellfähigen smektitischen Tonmineralien, bei Benetzung mit Feuchtigkeit Klumpen bilden.

Vorzugsweise liegen die Gewichtsverhältnisse zwischen feinteiligem cellulosehaltigem Material und/oder zerkleinertem Holzmaterial einerseits und smektitischem Tonmineral andererseits zwischen 0,5 : 9,5 und 6,5 : 3,5, insbesondere zwischen 1 : 9 und 5 : 5. Bei Anwendung dieser Gewichtsverhältnisse wird eine ausgezeichnete Klumpenbildung erreicht.

Vorzugsweise geht man von einem Ca- und/oder Na-Smektit mit einer Wasseraufnahmefähigkeit (bezogen auf den getrockneten Smektit mit einer Restfeuchte von 6 Gew.-%) von mindestens etwa 100 %, vorzugsweise von 120 bis 350 %, insbesondere von 120 bis 300 % und einem Smektitgehalt von 60 bis 80 Gew.-% aus. Neben dem Smektit kann das smektitische Tonmineral andere Tonmineralien, wie Kaolinit sowie Glimmer, Feldspat und Quarz enthalten.

Nach einer weiteren bevorzugten Ausführungsform wird das Ausgangsgemisch bei einem Wassergehalt von 5 bis 20 % in einem Preßaggregat (z.B. in einem Walzenkompaktierer der Firma Bepex oder der Firma Köppern) kompaktiert, brikettiert oder preßgranuliert.

Eine weitere Optimierung der Streueigenschaften kann dadurch erreicht werden, daß man die Mischung auf eine Korngröße von etwa 0,1 bis 10 mm, vorzugsweise von 1 bis 5 mm, insbesondere mit einem Anteil von 20 bis 35 Gew.-% der Fraktion 1 bis 2 mm und einem Anteil von 80 bis 65 Gew.-% der Fraktion 2 bis 5 mm, einstellt und die beim Zerkleinern entstehenden Feinanteile absiebt und in die Mischvorrichtung zurückleitet.

Vorzugsweise geht man von einem feinfaserigen und/oder einem Sekundärfasern enthaltenden Cellulose-Rohstoff, insbesondere von einem Cellulosefasern enthaltendem Material mit einer durchschnittlichen Faserlänge von 0,4 bis 3 mm, vorzugsweise von 0,8 bis 1,5 mm, und einem Wassergehalt von 5 bis 15 Gew.-% aus. Man kann aber auch von einem feingemahlenen Holzmehl und/oder einem zerkleinerten, Holzfasern enthaltenden Rohstoff, insbesondere von einem faserhaltigen Material mit einer durchschnittlichen Partikellänge von 0,5 bis 2mm, vorzugsweise von 0,1 bis 1,0 mm, und einem Wassergehalt von 5 bis 20 % ausgehen.

Es können ferner Mischungen aus feinteiligem cellulosehaltigem Material und zerkleinertem Holzmaterial verwendet werden.

Gegenstand der Erfindung ist ferner ein Sorptionsmittel, das nach dem vorstehend beschriebenen Verfahren erhältlich ist und das durch eine Restfeuchte von etwa 6 bis 19, vorzugsweise von 10 bis 15 Gew.-%, und einer Wasseraufnahmefähigkeit von mehr als 100 Gew.-%, vorzugsweise von mehr als 120 Gew.-% (bezogen auf die bis auf eine Restfeuchte von 6 Gew.-% getrocknete Mischung) gekennzeichnet ist.

Das erfindungsgemäße Sorptionsmittel bildet bei Befeuchtung mit wäßrigen Flüssigkeiten Klumpen.

Das erfindungsgemäße Sorptionsmittel hat gewöhnlich ein Schüttgewicht von 300 bis 900 g/l, vorzugsweise von 400 bis 700 g/l.

Das erfindungsgemäße Sorptionsmittel kann ferner mit an sich bekannten Sorptionsmitteln verschnitten werden. Weiterhin kann das Sorptionsmittel Weißpigmente, Desinfektionsmittel und/oder Tierakzeptanzien enthalten.

Gegenstand der Erfindung ist ferner die Verwendung des vorstehend angegebenen Sorptionsmittels als Packungsmaterial, Aufsaugmittel für Flüssigkeiten, wie Körperflüssigkeiten, Öl, flüssige Chemikalien, sowie als Streumaterial für Heimtiere, insbesondere als Katzenstreu.

Die Eigenschaften des erfindungsgemäßen Sorptionsmittels werden im allgemeinen wie folgt bestimmt:

### 1. Wasseraufnahmefähigkeit.

Nach einer Modifikation der Methode 17-A der Firma WESTINGHOUSE werden 20 g des körnigen Sorptionsmittels in ein gewogenes kegelförmiges Drahtsiebgewebe mit einem Durchmesser von 7 cm und einer Höhe von 7,6 cm eingewogen.

Das gefüllte Sieb wird dann in ein mit Wasser gefülltes Becherglas derart eingehängt, daß das Material vollständig mit Wasser bedeckt ist. Nach einer Saugzeit von 20 Minuten wird das Sieb weitere 20 Minuten in ein leeres Becherglas zum Abtropfen gehängt. Nach Beendigung der Tropfzeit wird das Sieb mit Inhalt erneut gewogen. Die Wasseraufnahmefähigkeit (%) entspricht der Gleichung $100 \times E/D$, wobei E die aufgesaugte Menge Wasser und D die Einwaage des körnigen Materials bedeutet.

### 2. Wassergehalt.

Eine Granulatprobe wird im Trockenschrank bis zur Gewichtskonstanz getrocknet; aus der Gewichtsdifferenz vor und nach dem Trocknen wird der Gehalt an adsorbiertem Wasser bestimmt. Im einzelnen werden 10 bis 20 g Granulat in einer flachen Schale auf 0,01 g genau eingewogen und im Trockenschrank bei 100°C bis zur Gewichtskonstanz getrocknet (mindestens 2 Stunden). Anschließend läßt man die Probe im Exsikkator auf Raumtemperatur abkühlen und wiegt aus. Der Wassergehalt wird wie folgt berechnet:

$$\text{Wassergehalt (\%)} = \frac{\text{Einwaage-Auswaage}}{\text{Einwaage}} \times 100$$

In entsprechender Weise kann der Wassergehalt des feinteiligen cellulosehaltigen Materials bzw. des zerkleinerten Holzmaterials bestimmt werden.

### 3. Wasserdurchschlagtest

Auf eine eingeebnete und nicht verdichtete Schüttung des körnigen Sorptionsmittels in einer Glasschale (Durchmesser 140 mm, Höhe 75 mm, Füllhöhe 50 mm) wird Wasser aus einem 50 ml-Bürette gegeben und die Eindringtiefe beobachtet. Hierbei wird der Auslauf der Bürette in einer Höhe von 3 bis 4 cm in die Mitte der Schüttung gebracht, worauf 60 ml Leitungswasser innerhalb von 55 bis 60 Sekunden auslaufen gelassen werden. Nach einer Wartezeit von 3 Minuten wird an der Schalenunterseite geprüft, ob Wasser durchgelaufen ist; das Durchlaufen ist an einer Verfärbung des körnigen Materials an der Schalenunterseite erkennbar. Die Auswertung wird wie folgt durchgeführt:

- Verfärbung am Schalenboden nicht sichtbar: Test bestanden;
- Verfärbung am Schalenboden sichtbar: Test nicht bestanden.

4. Schüttgewicht

Ein 500 ml-Meßzylinder wird zunächst leer gewogen. Darauf wird ein Pulvertrichter mit einer Öffnung von etwa 15 cm und einer Auslaßöffnung von etwa 3 cm aufgesetzt und innerhalb von etwa 5 Sekunden mit dem Sorptionsmittel-Granulat gefüllt. Danach wird der Pulvertrichter vom Meßzylinder abgenommen, und zwar so, daß das darin befindliche Granulat einen überstehenden Kegel bildet. Dieser wird mit einem breiten Spatel entlang der Schnittkante des Meßzylinders abgestreift. Der gefüllte Meßzylinder wird außen von anhängenden Körnern oder Staub befreit und erneut gewogen. Das Schüttgewicht wird wie folgt berechnet:

$$\text{Schüttgewicht (g/l)} = 2 \times \text{Gewicht netto (g/500 ml)}$$

Die Erfindung ist durch die nachstehenden Beispiele erläutert:

Beispiel 1 (Vergleich)

Aufgemahlenes Altpapier mit einer durchschnittlichen Faserlänge von 0,8 - 1,2 mm (etwa 10 Gew.-% Wasser) wird in einem Kompaktor der Firma Hutt (L 200 - 50 P) bei einem Preßdruck von etwa 40 kN/cm kompaktiert und gebrochen und die Kornfraktion von 1 - 5 mm wird abgesiebt.
Der Durchschlagtest wird nicht bestanden; das befeuchtete Material bildet keine Klumpen.

Beispiel 2 (Vergleich)

2 kg einer Mischung, bestehend aus 25 Gew.-% gemahlenem Altpapier mit einer durchschnittlichen Faserlänge von 0,8 - 1,2 mm (etwa 10 Gew.-% Wasser) und 75 Gew.-% gemahlenem, quarzhaltigen, natürlichen Rohkaolin mit einem Wassergehalt von etwa 10 - 15 Gew.-%, werden wie in Beispiel 1 beschrieben, kompaktiert, gebrochen und gesiebt. Das Streumaterial entspricht etwa dem Streumaterial nach der DE-A-4 028 933.
Der Durchschlagtest wird nicht bestanden; das befeuchtete Material bildet keine Klumpen.

Beispiel 3

In Abänderung der unter Beispiel 2 beschriebenen Arbeitsweise wird anstelle von Rohkaolin 75 Gew.-% gemahlener, natürlicher Ca-Bentonit (Montmorillonit-Gehalt: etwa 60 %) mit einem Wassergehalt von etwa 10 - 15 Gew.-% eingesetzt.
Der Durchschlagtest wird bestanden; das befeuchtete Material bildet Klumpen, die in kompakter Form vollständig entnommen werden können.

Wasseraufnahmefähigkeit : 510 Gew.-%
Wassergehalt            : 10,6 Gew.-%
Schüttgewicht           : 650 g/l

Beispiel 4 (Vergleich)

Etwa 2 kg aufgemahlenes Holzmehl (Hartholz) mit einer durchschnittlichen Partikelgröße von 0,1 - 0,5 mm (etwa 10 Gew.-% Wasser) werden in einem Kompaktor der Firma Hutt (L 200 - 50 P) bei einem Preßdruck von etwa 40 kN/cm kompaktiert.
Der Durchschlagtest wird nicht bestanden; das befeuchtete Material bildet keine Klumpen.

Beispiel 5 (Vergleich)

In Abänderung der in Beispiel 4 beschriebenen Arbeitsweise wird ein zerkleinertes Holzschliffmaterial (Hartholz) mit einer durchschnittlichen Partikellänge von 0,5 - 2,0 mm (etwa 10 Gew.-% Wasser) verwendet und nach dem Kompaktieren gebrochen und auf die Kornfraktion 1 - 5 mm abgesiebt.
Der Durchschlagtest wird nicht bestanden; das befeuchtete Material bildet keine Klumpen.

Beispiel 6 (Vergleich)

Etwa 2 kg einer Mischung, bestehend aus 30 Gew.-% gemahlenem Holzmehl mit einer durchschnittlichen Partikellänge von 0,1 - 0,5 mm (etwa 10 Gew.-% Wasser) und 70 Gew.-% gemahlenem, natürlichen, quarzhaltigen Rohkaolin mit einem Wassergehalt von etwa 10 - 15 Gew.-% werden, wie in Beispiel 1 beschrieben, kompaktiert, gebrochen und gesiebt.

Der Durchschlagtest wird nicht bestanden; das befeuchtete Material bildet keine Klumpen.

Beispiel 7

In Abänderung der unter Beispiel 6 beschriebenen Arbeitsweise wird anstelle von Rohkaolin gemahlener, natürlicher Ca-Bentonit (Montmorillonit-Gehalt: etwa 60 %) mit einem Wassergehalt von etwa 10 - 15 Gew.-% eingesetzt. Die verwendeten Mischungsverhältnisse und eingesetzten Holzstoffe sind in Tabelle 1 zusammengestellt.

Der Durchschlagtest wird bestanden; das befeuchtete Material bildet Klumpen, die in kompakter Form vollständig entnommen werden können.

Tabelle 1

| Mischungen von Holzmaterial mit Smektit und deren Eigenschaften | | | | | |
|---|---|---|---|---|---|
| Mischung* | | Wassergehalt | Schüttgewicht | Wasseraufnahmefähigkeit | Durchschlagtest |
| Buchenholz (%) | Bentonit (%) | (%) | (g/l) | (%) | - |
| 20 ) | 80 | 13,7 | 630 | 142 | bestanden |
| 30 ) | 70 | 13,5 | 550 | 173 | bestanden |
| 40 ) [1] | 60 | 13,4 | 500 | 210 | bestanden |
| 50 ) | 50 | 14,0 | 420 | 245 | bestanden |
| Fichtenholz (%) | Bentonit (%) | | | | |
| 20 [1] | 80 | 14,1 | 737 | 154 | bestanden |
| 20 [2] | 80 | 14,8 | 796 | 151 | bestanden |

[1] Partikelgröße 0,5 - 1,0 mm
[2] Partikelgröße 0,1 - 0,5 mm
* Mischungen aus den Kornfraktionen 30 % 1 - 2 mm und 70 % 2 - 5 mm

Beispiel 8

In Abänderung der in Beispiel 7 beschriebenen Arbeitsweise wird eine Mischung bestehend aus 15 Gew.-% aufgemahlenem Holzmehl (etwa 10 Gew.-% Wasser), 15 Gew.-% aufgemahlenem Altpapier (etwa 10 Gew.-% Wasser) und 70 Gew.-% gemahlenem, natürlichen Ca-Bentonit (Montmorillonit-Gehalt: etwa 60 %) mit einem Wassergehalt von etwa 10 - 15 Gew.-% kompaktiert. Das Material wird, wie in Beispiel 1 beschrieben, kompaktiert, gebrochen und gesiebt.

Der Durchschlagtest wird bestanden; das befeuchtete Material bildet Klumpen, die in kompakter Form entnommen werden können.

Wasseraufnahmefähigkeit : 440 Gew.-%
Wassergehalt            : 12,3 Gew.-%
Schüttgewicht           : 670 g/l

**Patentansprüche**

1. Verfahren zur Herstellung von Sorptionsmitteln auf der Basis von Cellulosefasern, zerkleinertem Holzmaterial und Tonmineralien, zur Aufnahme von Flüssigkeiten, dadurch gekennzeichnet, daß man

    (a) ein feinteiliges cellulosehaltiges Material mit einer durchschnittlichen Faserlänge von 0,4 bis 3 mm und einer Restfeuchte von 5 - 15 Gew.-% und/oder
    (b) ein zerkleinertes Holzmaterial mit einer durchschnittlichen Faserlänge von 0,05 bis 2,0 mm und einer Restfeuchte von 10 bis 20 Gew.-%; und
    (c) ein smektitisches Tonmineral in feinteiliger Form mit einer durchschnittlichen Partikelgröße von 0,1 bis 1,0

6

mm, einer Restfeuchte von 5 bis 15 Gew.-% und einem Smektitgehalt von mindestens 50 Gew.-% homogen vermischt

(d) die Mischung verdichtet und

(e) die verdichtete Mischung zerkleinert.

2. Verfahren nach Anspruch 1, dadurch gekennzeichnet, daß man als feinteiliges cellulosehaltiges Material einen feingemahlenen Zellstoff und/oder einen Sekundärfasern enthaltenden Cellulose-Stoff und als zerkleinertes Holzmaterial feingemahlenes Holzmehl und/oder zerkleinerte Holzspäne verwendet.

3. Verfahren nach Anspruch 1 oder 2, dadurch gekennzeichnet, daß man die Mischung in der Stufe (d) kompaktiert, brikettiert oder preßgranuliert.

4. Verfahren nach Anspruch 3, dadurch gekennzeichnet, daß man einen Preßdruck von 20 bis 200 kN/cm, vorzugsweise von 40 bis 100 kN/cm anwendet.

5. Verfahren nach einem der Ansprüche 1 bis 4, dadurch gekennzeichnet, daß man das Ausgangsgemisch zwischen Preßwalzen, wie Brikettierwalzen oder Preßgranulierwalzen, leitet.

6. Verfahren nach einem der Ansprüche 1 bis 5, dadurch gekennzeichnet, daß man das Ausgangsgemisch bei einem Wassergehalt von 10 - 19 Gew.-% kompaktiert, brikettiert oder preßgranuliert.

7. Verfahren nach einem der Ansprüche 1 bis 6, dadurch gekennzeichnet, daß man von einem Ca- und/oder Na-Smektit mit einer Wasseraufnahmefähigkeit (bezogen auf den getrockneten Smektit mit einer Restfeuchte von 6 Gew.-%) von mindestens etwa 100, vorzugsweise von 120 - 350 %, insbesondere von 120 bis 300 % und einem Smektitgehalt von 60 - 80 Gew.-% ausgeht.

8. Verfahren nach einem der Ansprüche 1 bis 7, dadurch gekennzeichnet, daß man ein Cellulosefasern enthaltendes Material mit einer durchschnittlichen Faserlänge von 0,4 bis 3 mm und einem Wassergehalt von 5 bis 15 Gew.-% und/oder ein feingemahlenes Holzmehl und/oder einen zerkleinerten Holzschliff enthaltenden Stoff mit einer durchschnittlichen Partikelgröße von 0,1 bis 2,0 mm und einem Wasssergehalt von 10 bis 15 Gew.-% verwendet.

9. Verfahren nach einem der Ansprüche 1 bis 8, dadurch gekennzeichnet, daß man die Gewichtsverhältnisse zwischen feinteiligem celluloshaltigem Material und/oder zerkleinertem Holzmaterial einerseits und smektitischem Tonmineral andererseits auf 0,5 : 9,5 bis 6,5 : 3,5, insbesondere auf 1 : 9 bis 5 : 5 einstellt.

10. Verfahren nach einem der Ansprüche 1 bis 9, dadurch gekennzeichnet, daß man die Mischung auf eine Korngröße von etwa 0,1 bis 10 mm, vorzugsweise von 1 bis 5 mm, insbesondere mit einem Anteil von 20 bis 35 Gew.-% der Fraktion 1 bis 2 mm und einem Anteil von 80 bis 65 Gew.-% der Fraktion 2 bis 5 mm einstellt und die beim Zerkleinern entstehenden Feinanteile absiebt und in die Mischvorrichtung zurückleitet.

11. Sorptionsmittel, das nach dem Verfahren der Ansprüche 1 bis 10 erhältlich ist und das durch eine Restfeuchte von etwa 6 bis 19, vorzugsweise von etwa 10 bis 15 Gew.-% und einer Wasseraufnahmefähigkeit von mehr als 100 %, vorzugsweise von mehr als 120 % (bezogen auf die bis auf eine Restfeuchte von 6 Gew.-% getrocknete Mischung) gekennzeichnet ist.

12. Sorptionsmittel nach Anspruch 11, dadurch gekennzeichnet, daß es bei Befeuchtung mit wäßrigen Flüssigkeiten Klumpen bildet.

13. Sorptionsmittel nach Anspruch 11 oder 12, gekennzeichnet durch ein Schüttgewicht von 300 bis 900 g/l, vorzugsweise von 400 bis 700 g/l.

14. Sorptionsmittel nach einem der Ansprüche 11 bis 13, dadurch gekennzeichnet, daß es mit an sich bekannten Sorptionsmitteln verschnitten ist und weiterhin Weißpigmente, Desinfektionsmittel und/oder Tierakzeptanzien enthält.

15. Verwendung des Sorptionsmittels nach einem der Ansprüche 11 bis 14 als Packungsmaterial, Aufsaugmittel für Flüssigkeiten, wie Körperflüssigkeiten, Öl, flüssige Chemikalien, sowie als Streumaterial für Heimtiere, insbesondere als Katzenstreu.

**Claims**

1. A method of preparing sorbents based on cellulose fibres, comminuted wood material and clay minerals for the absorption of liquids, characterised in that

   a) a finely divided, cellulose-containing material with an average fibre length of 0.4 to 3.0 mm and a residual moisture content of 5 to 15 % by weight and/or
   b) a comminuted wood material with an average fibre length of 0.05 to 2.0 mm and a residual moisture content of 10 to 20 % by weight, and
   c) a smectitic clay mineral in finely divided form with an average particle size of 0.1 to 1.0 mm, a residual moisture content of 5 to 15 % by weight and smectite content of at least 50 % by weight are homogeneously mixed,
   d) the mixture is compacted and
   d) the compacted mixture is comminuted.

2. A method according to Claim 1, characterised in that the finely divided cellulose-containing material is a finely ground cellulose or a cellulose material containing secondary fibres, and finely ground wood flour and/or comminuted wood shavings is/are used as the comminuted wood material.

3. A method according to Claim 1 or 2, characterised in that the mixture in stage (d) is compacted, briquetted or press-granulated.

4. A method according to Claim 3, characterised in that a pressing force of 20 to 200 kN/cm, preferably 40 to 100 kN/cm, is used.

5. A method according to any one of Claims 1 to 4, characterised in that the starting mixture is directed between pressing rolls, such as briquetting rolls or press-granulating rolls.

6. A method according to any one of Claims 1 to 5, characterised in that the starting mixture is compacted, briquetted or press-granulated with a water content of 10 to 19 % by weight.

7. A method according to any one of Claims 1 to 6, characterised in that a Ca and/or Na smectite with a water-absorption capacity (in relation to the dried smectite with a residual moisture content of 6 % by weight) of at least approximately 100 %, preferably 120 to 350 %, in particular 120 to 300 %, and a smectite content of 60 to 80 % by weight is used as starting material.

8. A method according to any one of Claims 1 to 7, characterised in that a cellulose-fibre containing material having an average fibre length of 0.4 to 3.0 mm and a water content of 5 to 15 % by weight, and/or a finely ground wood flour and/or a material containing comminuted wood pulp with an average particle size of 0.1 to 2.0 mm and a water content of 10 to 15 % by weight, is used.

9. A method according to any one of Claims 1 to 8, characterised in that the weight ratios between finely divided cellulose-containing material and/or comminuted wood material, on the one hand, and smectitic clay mineral, on the other hand, are adjusted to 0.5:9.5 to 6.5:3.5, in particular to 1:9 to 5:5.

10. A method according to any one of Claims 1 to 9, characterised in that the mixture is adjusted to a grain size of approximately 0.1 to 10 mm, preferably 1 to 5 mm, in particular with a proportion of 20 to 35 % by weight of the fraction 1 to 2 mm and a proportion of 80 to 65 % by weight of the fraction 2 to 5 mm, and the fines produced during comminution are sieved and returned to the mixing apparatus.

11. A sorbent which can be obtained according to the method of Claims 1 to 10 and which is characterised by a residual moisture content of approximately 6 to 19 %, preferably approximately 10 to 15 % by weight and a water-absorption capacity of more than 100 %, preferably of more than 120 % (in relation to the mixture dried to a residual moisture content of 6 % by weight).

12. A sorbent according to Claim 11, characterised in that it forms lumps when wetted with aqueous liquids.

13. A sorbent according to Claim 11 or 12, characterised by a bulk density of 300 to 900 g/l, preferably 400 to 700 g/l.

14. A sorbent according to any one of Claims 11 to 13, characterised in that it is blended with sorbents which are known per se and further contains white pigments, disinfectants and/or animal acceptance agents.

15. Use of the sorbent according to any one of Claims 11 to 14 as a packing material, an absorbent for fluids, such as body fluids, oil or liquid chemicals, and also as litter for pets, in particular as cat litter.

**Revendications**

1. Procédé de préparation de sorbants à base de fibres de cellulose, d'un matériau à base de bois fragmenté et de minéraux argileux, pour absorber des liquides, caractérisé en ce que

    (a) on mélange jusqu'à homogénéité un matériau contenant de la cellulose et finement divisé, ayant une longueur moyenne de fibres de 0,4 à 3 mm et une humidité résiduelle de 5 à 15 % en poids, et/ou
    (b) un matériau à base de bois fragmenté, ayant une longueur moyenne de fibres de 0,05 à 2,0 mm et une humidité résiduelle de 10 à 20 % en poids ; et
    (c) un mineral argileux smectique sous forme finement divisée, ayant une granulométrie moyenne de 0,1 à 1,0 mm, une humidité résiduelle de 5 à 15 % en poids et une teneur en smectite d'au moins 50 % en poids,
    (d) on concentre le mélange, et
    (e) on broie le mélange concentré.

2. Procédé selon la revendication 1, caractérisé en ce qu'on utilise en tant que matériau à base de cellulose et finement divisé une pâte finement broyée et/ou une pâte de cellulose contenant des fibres secondaires, et, en tant que matériau à base de bois fragmenté, de la sciure finement broyée et/ou des copeaux de bois fragmentés.

3. Procédé selon la revendication 1 ou 2, caractérisé en ce que le mélange de l'étape (d) est compacté, briquetté ou granulé sous pression.

4. Procédé selon la revendication 3, caractérisé en ce qu'on utilise une pression de compression de 20 à 200 kN/cm et de préférence de 40 à 100 kN/cm.

5. Procédé selon l'une des revendications 1 à 4, caractérisé en ce qu'on fait passer le mélange de départ entre des cylindres de compression tels que des cylindres de briquettage ou des cylindres de granulation sous compression.

6. Procédé selon l'une des revendications 1 à 5, caractérisé en ce qu'on soumet le mélange de départ, ayant une teneur en eau de 10 à 19 % en poids, à un compactage, un briquettage ou une granulation sous compression.

7. Procédé selon l'une des revendications 1 à 6, caractérisé en ce qu'on part d'une smectite de Ca et/ou de Na ayant un pouvoir d'absorption de l'eau (rapporté à la smectite séchée ayant une humidité résiduelle de 6 % en poids) d'au moins environ 100, de préférence de 120 à 350 et en particulier de 120 à 300 %, et d'une teneur en smectite de 60 à 80 % en poids.

8. Procédé selon l'une des revendications 1 à 7, caractérisé en ce qu'on utilise un matériau contenant des fibres de cellulose ayant une longueur moyenne des fibres de 0,4 à 3 mm et une teneur en eau de 5 à 15 % en poids, et/ou une sciure finement broyée et/ou une pâte contenant des copeaux de bois fragmentés, ayant une granulométrie moyenne de 0,1 à 2,0 mm et une teneur en eau de 10 à 15 % en poids.

9. Procédé selon l'une des revendications 1 à 8, caractérisé en ce qu'on ajuste les proportions pondérales entre le matériau contenant de la cellulose et finement divisé et/ou le matériau à base de bois fragmenté d'une part, et le minéral argileux smectitique d'autre part, à une valeur de 0,5:9,5 à 6,5:3,5 et en particulier de 1:9 à 5:5.

10. Procédé selon l'une des revendications 1 à 9, caractérisé en ce qu'on ajuste le mélange à une granulométrie d'environ 0,1 à 10 mm, de préférence de 1 à 5 mm, contenant en particulier de 20 à 35 % en poids de la fraction ayant une granulométrie de 1 à 2 mm et de 80 à 65 % en poids de la fraction ayant une granulométrie de 2 à 5 mm, et on tamise les fines qui se forment lors de la fragmentation, et on les renvoie dans l'appareil mélangeur.

11. Sorbant pouvant être obtenu par le procédé selon les revendications 1 à 10, et qui est caractérisé par une humidité résiduelle d'environ 6 à 19 et de préférence d'environ 10 à 15 % en poids et un pouvoir d'absorption de l'eau supérieur à 100 % et de préférence supérieur à 120 % (par rapport au mélange séché jusqu'à une humidité résiduelle de 6 % en poids).

12. Sorbant selon la revendication 11, caractérisé en ce qu'il forme des grumeaux lors d'une humidification avec des liquides aqueux.

13. Sorbant selon la revendication 11 ou 12, caractérisé par une masse volumique apparente de 300 à 900 g/l et de préférence de 400 à 700 g/l.

14. Sorbant selon l'une des revendications 11 à 13, caractérisé en ce qu'il est dilué avec des sorbants connus en soi et contient en outre des pigments blancs, des désinfectants et/ou des produits pour assurer une acceptation par les animaux.

15. Utilisation du sorbant selon l'une des revendications 11 à 14, en tant que matériau d'emballage, absorbant pour liquides tels que les fluides corporels, les huiles, les produits chimiques liquides, et aussi en tant que produit de litière pour animaux domestiques, en particulier en tant que litière pour chats.